# EUROPEAN PATENT SPECIFICATION

(11) **EP 2 728 801 B1**
(45) Date of publication and mention of the grant of the patent: **26.08.2015**
(21) Application number: 12290384.2
(22) Date of filing: 06.11.2012
(51) Int. Cl.: H04L 12/26, H04L 12/28

(54) **Device and method for home network analysis**
Vorrichtung und Verfahren zur Heimnetzwerkanalyse
Dispositif et procédé d'analyse de réseau domestique

(43) Date of publication of application: 07.05.2014
(73) Proprietor: ALCATEL LUCENT, 92100 Boulogne-Billancourt (FR)
(72) Inventor: Gacanin, Haris, 2600 Antwerpen (BE)
(74) Representative: ALU Antw Patent Attorneys

(56) References cited:
- EP-A1- 2 482 490
- US-A1- 2004 049 714

## Description

### Field of the Invention

The present invention generally relates to the field of devices and methods for improving the performance analysis of home network infrastructure.

### Background of the Invention

Residential internet connectivity traditionally consists of single voice-band modem, a Digital Subscriber Line or DSL modem, or a coax-cable modem, connected to a computer in the house. With the arrival of new applications and technologies, such as digital television, on-line gaming and home automation, the Internet access needs to be extended to various types of home devices, such as a set-top box, a game console, a home automation system, plural desktops or laptops, etc. All those home devices are then typically interconnected by means of a home network, which need to be set up and configured. A home network typically accesses the Internet via a home network gateway or residential gateway, which is connected to an access network via a traditional DSL modem or coax-cable modem. The interconnectivity between two devices in the home network itself is based on, typically already existing, in-house media such as twisted pair phone wires, electrical power wires, coax-cables and/or wireless technologies like WiFi.

Most of the time, the in-house available media typically suffers from a low quality physical layer offering poor immunity for interference in-house. Twisted pair phone wires are usually slightly twisted. Electrical power wires typically consist of low category cable that is not twisted at all. As a result, these existing media are usually sensitive to various kinds of noise. Further also the usable spectrum of such a home network is limited by the characteristics of the medium and structure of the network.

The communication links between two home network devices may be impacted by plurality of potential disturbers to such an extent that the usable signal-to-noise ratio (SNR) between the two home network devices is drastically reduced, sometimes to such that the intended service cannot be provided. When such performance issues arise in such a home network, analysis and troubleshooting is left to the end user, often without assistance. When advice is provided by a telecommunication operator helpdesk, the analysis of the problem reaches beyond the access network and in most cases triggers the dispatch of the telecommunication operator technicians to investigate the performance problems in the customer premises. This is time consuming and inefficient.

Furthermore, especially in the case of a home network comprising a power line communication (PLC) network physical level disturbers such as for example dimmers, and different loads are plugged in and out of the layer network during operation. These can concern active as well as passive devices such as for example PC monitors, mobile phone chargers, extension cords, etc. Such transient loads on the home network might have significant impact on the home network performance, however by the time a technician arrives at the scene to diagnose the problem it might not be present anymore, for example because the device was removed again from the home network or because it was deactivated or in another operating mode.

Therefore there exists a need for an improved method and system for analysing a home network that is able to cope with performance problems more reliably and is able to provide reliable clues that could lead to the identification of possible disturbers.

EP 2 482 490 discloses a home network analyser with a collection and a classification module.

### Summary of the Invention

According to a first aspect of the invention there is provided a home network analyser for a home network comprising:
- A collection module configured to collect a plurality of consecutive measurements of:
   - a home network performance parameter and
   - a home network signature parameter;
- A detection module connected to said collection module and configured to detect a change in said home network performance parameter;
- A selection module connected to said collection module and said detection module and configured to select, when said detection module detects said change, a first measurement of said home network signature parameter and a second measurement of said home network signature parameter, said first measurement being collected during a first time period preceding said change and said second measurement being collected during a second time period following said change;
- A classification module connected to said selection module and configured to analyse said first measurement and said second measurement.

In this way the network analyser allows to cope with performance problems more reliably and is able to provide reliable clues that could lead to the identification of possible disturbers.

According to an embodiment said home network comprises a power line communication network.

The network analyser is especially beneficial in the context of a PLC network because of the high likelihood of addition or removal of devices that could impact network performance.

Optionally, the home network could comprise a coax communication network and/or a twisted pair communication network. Also here there is a certain likelihood of addition or removal of devices that could impact network performance.

Preferably said home network performance parameter comprises one or more of the following parameters:
- data rate;
- data error rate.

These parameters allow the transient behaviour of the level of the home network performance by means of parameters that are often already monitored by the network analyser such as data rates and data error rates which can be based on for example bit error rates, cyclic redundancy check (CRC) error rates, Automatic repeat request (ARQ) counters, etc.

According to an embodiment said detection module is configured to detect said change in said home network performance parameter when said home network performance parameter passes a predetermined home network performance parameter threshold.

This allows for a simple and user friendly implementation of the network performance analysis.

According to a further embodiment said home network signature parameter comprises the Channel Delay Spread of said home network, which is the inverse Fourier transform of the Channel Frequency Response of said home network.

Optionally said home network signature parameter further comprises the signal energy of said home network.

Preferably said classification module is further configured to link said Channel Delay Spread to a home network topology, selected from:
- an open circuit network topology, comprising a home network branch without a device coupled to it, when said channel delay spread exceeds a predetermined maximum value;
- a matched impedance load network topology, comprising a home network branch with a device with a matched impedance load, when said channel delay spread is lower than a predetermined minimum value; and/or
- a mismatched load impedance network topology, comprising a home network branch with a device with a mismatched impedance load, when said channel delay spread is a value between said predetermined minimum value and said predetermined maximum value.

The network analyser is in this way able to analyse the measurements of the home network signature parameters in an automated and reliable way.

Optionally said classification module is further configured to link said Channel Delay Spread to a home network topology, selected from:
- an open circuit network topology, comprising a home network branch without a device coupled to it, when additionally said signal energy is reduced with respect to the theoretical channel energy of a direct link home network topology;
- a matched impedance load network topology, comprising a home network branch with a device with a matched impedance load, when additionally said signal energy is reduced with respect to the theoretical channel energy of a direct link home network topology and reduced with respect to the theoretical channel energy of an open circuit home network topology; and/or
- a mismatched load impedance network topology, comprising a home network branch with a device with a mismatched impedance load, when said signal energy is reduced with respect to the theoretical channel energy of a direct link home network topology and is increased with respect to the theoretical channel energy of an open circuit home network topology.

This still further adds reliability to the discrimination between both measurements.

According to a further embodiment said classification module is further configured to link said comparison of said first measurement of said home network signature parameter and said second measurement of said home network signature parameter to a modification of said home network topology.

Preferably said classification module is further configured to link said modification of said home network topology to an addition and/or a removal of at least one device to said home network.

In this way the network analyser is able to pinpoint the cause of a change in the home network performance parameter in a user friendly and reliable way even in the context of a highly dynamic configuration of the home network topology.

According to a second aspect of the invention there is provided a method for analysing a home network by means of a home network analyser according to the first aspect of the invention, comprising the steps of:
- said collection module collecting a plurality of consecutive measurements of a home network performance parameter and a home network signature parameter;
- said detection module detecting a change in said home network performance parameter;
- said selection module selecting, when said detection module detects said change, a first measurement of said collected home network signature parameter and a second measurement of said home network signature parameter, said first measurement being collected during a first time period preceding said change and said second measurement being collected during a second time period following said change; and
- said classification module comparing said first measurement and said second measurement.

According to a third aspect of the invention there is provided a computer program product adapted to perform the method according to the second aspect of the invention

According to a fourth aspect of the invention there is provided a computer readable storage device encoding a machine-executable computer program according to the third aspect of the invention.

### Brief Description of the Drawings

Fig. 1 schematically illustrates an embodiment of a home network connected to a network analyser according to the invention;

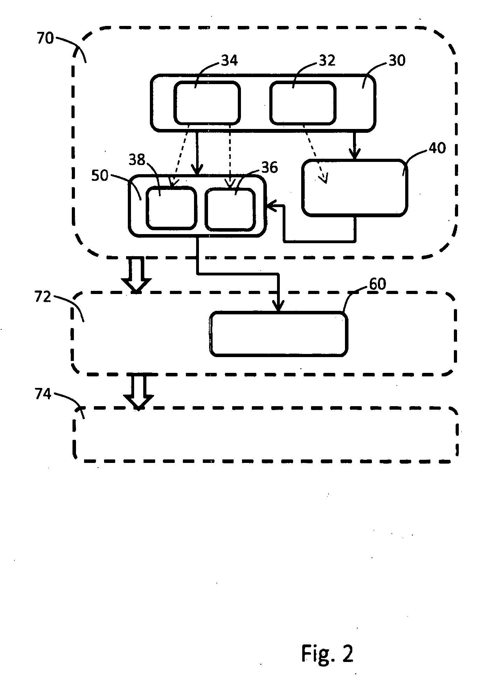

Fig. 2 schematically illustrates the network analyser of Figure 1 in more detail;
Fig. 3 schematically illustrates a performance parameter of the home network as collected by the network analyser of Figure 1
Figures 4A, 4B, 5A, 5B, 6A and 6B schematically illustrate a home network signature parameter as collected by the home network analyser of Figure 1 and respectively their corresponding home network topology.

### Detailed Description of Embodiment(s)

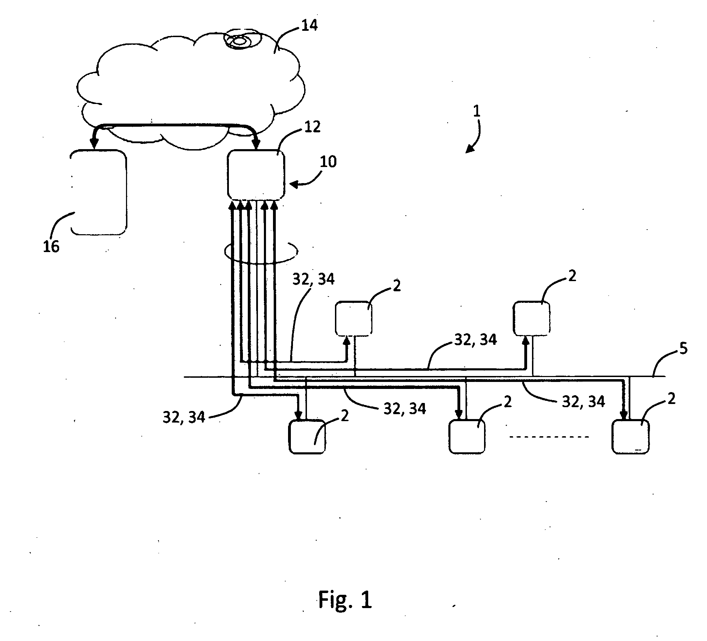

Figure 1 schematically shows a home network 1 that comprises a plurality of home network devices 2, such as for example a personal computer, a laptop, a tablet computer, a digital television set top box, a gaming console, etc., these home network devices 2 being linked by means of power lines 5 of a power line communication network (PLC). It is clear that according to alternative embodiments the home network devices 2 could be linked to the home network 1 by means of wireless communication links, phone lines or coaxial cables or any other suitable physical communication medium. This home network 1 usually resides in the end customer premises and is connected by means of a suitable home gateway or residential gateway 12 to an access network 14 which is connected to the telecommunication network 16 of the network operator or the internet. The home network analyser 10 for a home network 1 according to the embodiment of Figure 1 is implemented as an application programming interface available in this residential gateway 12. However the network analyser 10 could equally be implemented as a suitable software or hardware component of any other home network device 2 or any other suitable combination.

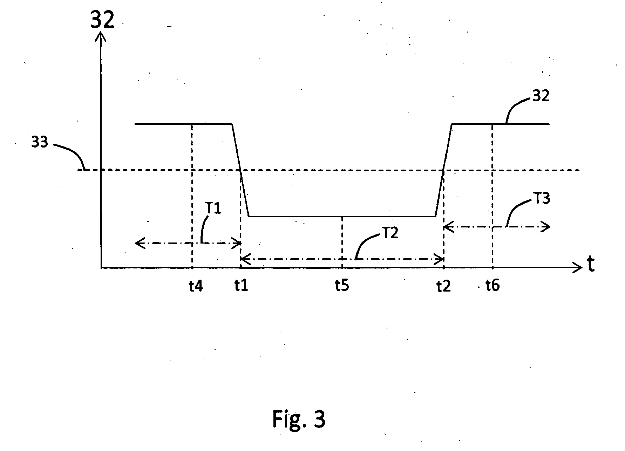

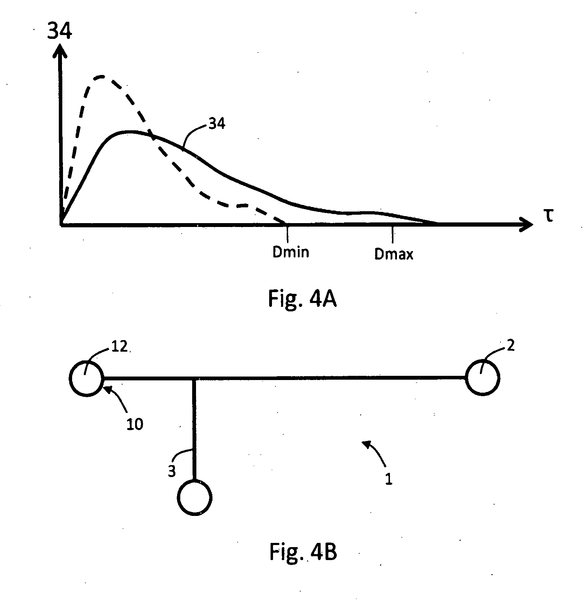

The home network analyser 10 comprises a collection module 30. This collection module 30 collects a plurality of consecutive measurements of a home network performance parameter 32, such as for example the data rate 1. Such a plurality of measurements of the data rate 32 is schematically illustrated in the diagram of Figure 3. The collection module 30 of the network analyser 10 further also collects a plurality of consecutive measurements of a home network signature parameter 34, which for example, such as shown in Figures 4A, 5A, 6A, is the Channel Delay Spread of the home network 1. This Channel Delay Spread can be measured by the network analyser 10 by measuring the Channel Frequency Response (CFR) of the home network 1 and then applying an inverse Fourier transform to this CFR in order to obtain the home network channel signature parameter 34 in the time domain. It is clear that according to alternative embodiments the home network signature parameter 34 could for example comprise the CFR or any other suitable network parameter or combination of parameters that could form the basis for identification of a change to the network configuration such as for example by the addition or removal of a device to the home network.

As further shown in Figure 1 the home network analyser 10 further comprises a detection module 40 that is connected to the collection module 30. This collection module 30 processes the measurements taken by the collection module and to detect a change in the home network performance parameter 32. Two such changes are for example visualised in Figure 3. The first one takes place at time t1 where there is a change from a high data rate to a low data rate. The second one takes place at time t2 where there is equally a change from a low data rate to a high data rate. Such a change can for example correspond with the home network performance parameter 32 passing a predetermined home network performance parameter threshold 33, such as for example the minimal data rate required to transmit a high definition television signal. At t1 this home network performance parameter threshold 33 is passed when the data rate 32 falls below it, and at t2 it is passed again as the data rate 32 again exceeds this home network performance parameter threshold 33. The change in the data rate 32 could for example be caused by addition or removal of a specific home network device 2 to the home network 1. It is clear that according to alternative embodiments the home network performance parameter 32 could comprise other parameters than the data rate as an indicator for the transient performance level of the home network 1. The home network performance parameter 32 could for example comprise data error rates, such as for example bit error rates, cyclic redundancy check (CRC) error rates, Automatic repeat request (ARQ) rates, etc. According to still other alternative embodiments the home network performance parameter 32 could be any suitable combination of suitable data rates and/or data error rates.

According to the invention in order to more reliably identify the cause of changes to the performance parameter 32 the network analyser 10 further comprises a selection module 50. When the detection module 40 detects a change in the data rate 32, it will signal this change to the selection module 50. The selection module 50 will then request the collection module 30 for at least two measurements of the home network channel signature parameter 34 for further analysis by a classification module 60. A first measurement 36 of the home network signature parameter 34 is selected from measurements that have been collected during the time period T1 preceding the change of the data rate 32 at t1. This could for example be a measurement at t4 of the channel delay spread of the home network 1. A second measurement 38 of the home network signature parameter 34 is selected from measurements that have been collected during the time period T2 following said change, such as for example a measurement at t5 of the channel delay spread of the home network 1. The classification module 60 then analyses the first measurement 36 and the second measurement 38 of the home network signature parameter 34 that were selected by the selection module 50, for example by comparing them in order to identify the cause of the change in the performance of the home network 1. According to an embodiment of the invention, the classification module 60 links the home network performance parameter 34, which is for example the Channel Delay Spread 34, to a specific network topology in order to perform an efficient analysis that supports identification of the cause of a change in the network performance parameter 32.

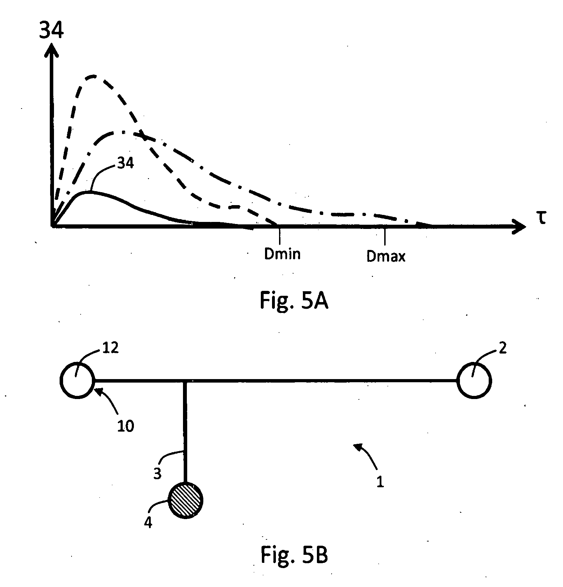

Figures 4A, 4B and 4C show three possible measurements of the Channel Delay Spread 34 of the home network 1 with a topology shown in Figures 5A, 5B and 5C. This exemplary embodiment of a home network 1 is a PLC network with a connection between the gateway 12 comprising the network analyser 10 and a home network device 2. This home network topology also comprises a branch 3 which in Figure 4B is open ended or an open circuit. This means that it comprises for example a power plug to which no device is connected. In Figure 5B the same home network topology is presented, however now there is connected a device 4 with a matched impedance load to the branch 3. Figure 5C also shows the same home network topology but here there is connected a device 5 with a mismatched load impedance to the branch 3.

In the situation illustrated in Figures 4A and 4B the transmitted signal between the gateway 12 and the home network device 2 will be almost completely reflected from the open end of the branch 3. As a result of this the Channel Delay Spread as shown in Figure 4A will be spread until Dmax and the total energy of the signal also be reduced because part of the signal energy will be attenuated within the branch 3. As such the classification module 60 will be able to link such a Channel Delay spread 34 to such an open circuit home network topology when the Channel Delay Spread exceeds a predetermined maximum value Dmax and/or when due to signal attenuation in powerline cables of branch 3 a reduced signal energy is observed with respect to the theoretical Channel Delay Spread of a direct link network topology as shown with the striped line in Figure 4A. In this way the classification module 60 will be able to link such a Channel Delay spread 34 to an open circuit home network topology.

The situation illustrated in Figures 5A and 5B relates to a scenario where the user plugged in a device 4 at the end of the branch 3 of the PLC network. This device 4 forms a load on the network 1 with a matched impedance. This means that the transmitted signal between the gateway 12 and the home network device 2 will be almost completely absorbed by the connected load in the form of the device 4 in branch 3 of the PLC network 1. Thus, there will be almost no reflected signal and the total energy of transmitted signal will be reduced by the amount of energy that is absorbed by the matched impedance load in the branch 3. As a result of this energy absorption in the branch 3 there is almost no reflected signal generated in this branch and the Channel Delay Spread will be shorter than a predetermined minimum value Dmin. Also due to this energy absorption in the branch 3 the signal energy, which corresponds to the surface area under the curve representing the Channel Delay Spread, will be reduced with respect to the theoretical channel energy of a direct link home network topology as shown in striped lines in Figure 5A and also reduced with respect to the theoretical channel energy of an open circuit home network topology as shown in dotted line in Figure 5A. In this way the classification module 60 will be thus be able to link such a Channel Delay spread 34 to a matched load impedance home network topology.

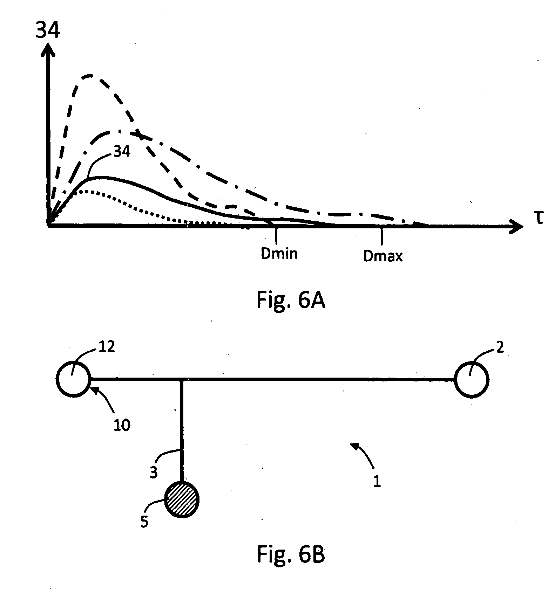

The situation illustrated in Figures 6A and 6B relates to a scenario where the user also plugged in a device 5 at the end of the branch 3 of the PLC network. However this device 5 forms a load on the network 1 with a mismatched impedance. This means that the transmitted signal between the gateway 12 and the home network device 2 will be partially absorbed or dissipated and partially reflected by the connected mismatched load formed by the device 5 connected to end of the branch 3. Thus, there will be less reflection in comparison with the open circuit situation illustrated in Figure 4B, while absorption will also be less than the matched impedance load situation illustrated in Figure 5B. As a result of the mismatched load in the branch 3 the reflected signal will result in a Channel Delay Spread as shown in Figure 6A, with a value between the predetermined minimum value Dmin and the predetermined maximum value Dmax. Additionally the signal energy is reduced with respect to the theoretical channel energy of a direct link home network topology as shown in striped lines and is increased with respect to the theoretical channel energy of an open circuit home network topology as shown in dotted lines. In this way the classification module 60 will be thus be able to link such a Channel Delay spread 34 to a mismatched load impedance home network topology.

The classification module 60 will thus be able to clearly link the measurements 36, 38 of the home network signature parameter 34 to one of the possible home network topologies as described above. Consequently the analysis comprising comparison of the first measurement 36 and the second measurement 38 will thus enable the classification module 60 to a modification of the home network topology. This means that when for example the classification module 60 on the basis of the first measurement at t4 determines an open circuit home network topology and on the basis of the second measurement at t5 determines a matched impedance home network topology, the classification module 60 is able to determine that the change in the data rate 32 caused at t1 is likely linked to the addition of a device 4 with a matched impedance load to the branch 3 of the home network 1.

According to an alternative scenario the collection module 30 during a first step 70 of the method of the invention, as explained above, collects the data rate 32 and Channel Delay Spread 34 of the PLC network as shown in Figures 4B, 5B, 6B. When the detection module 40 detects the change in data rate on t2, it signals this to the selection module 50 that subsequently selects a first measurement 36 and a second measurement 38 of the Channel Delay Spread 34. The first measurement is selected from the measurements taken by the collection module 30 during a time period T2 preceding t2, for example at t5, and the second measurement from the measurements during a time period T3 following t2, for example t6. During the next step 72 the classification module 60, after for example linking the first measurement 36 to a matched impedance home network topology and the second measurement 38 to an open circuit impedance home network topology, can link the change in the data rate 32 at t2 to the removal of a device 4 from the branch 3 of the home network 1. It is clear that a multitude of other scenarios are possible in which the classification module 60 will be able to link the change in the data rate 32 at a specific instance to a modification of the home network topology and consequently to an addition and/or a removal of at least one device 4, 5 to the home network 1.

Optionally in a further step 74 of the method, according to one embodiment the result of the network analysis as performed by the classification module can then be provided to a network operator or to the user of a home network by displaying them on a suitable display, such as for example the display of the home network device 2 or through an API available on the gateway 12 comprising the home network analyser 10. The network operator will then be able to link an addition or removal of a certain type of physical device to the PLC network at moments t1 and/or t2 and identify the cause of the change in the data rate 32 more efficiently. In this way problems can be identified, such as for example explained above with respect to the situation at t1, but equally important the solution, such as for example the removal of a device 4, 5 from the PLC network can be efficiently confirmed, such as for example shown with reference to the situation at t2.

It is clear that according to alternative embodiments of the invention the network analyser 10 will also be able to link the home network signature parameter 34 to an specific home network topology, as explained with reference to Figures 4A-6B, if the home network 1 comprises a twisted pair communication network or a coax communication network.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A home network analyser (10) for a home network (1) comprising:
- A collection module (30) configured to collect a plurality of consecutive measurements of:
- a home network performance parameter (32) and
- a home network signature parameter (34);
- A detection module (40) connected to said collection module (30) and configured to detect a change in said home network performance parameter (32);
- A selection module (50) connected to said collection module (30) and said detection module (40) and configured to select, when said detection module (40) detects said change, a first measurement (36) of said home network signature parameter (34) and a second measurement (38) of said home network signature parameter (34), said first measurement (36) being collected during a first time period preceding said change and said second measurement (38) being collected during a second time period following said change;
- A classification module (60) connected to said selection module (50) and configured to analyse said first measurement (36) and said second measurement (38).

2. A home network analyser according to claim 1, **characterised in that** said home network (1) comprises a power line communication network.

3. A home network analyser according to claim 1 or 2, **characterised in that** said home network (1) comprises:
- a coax communication network; and/or
- a twisted pair communication network.

4. A home network analyser according to any of the preceding claims, **characterised in that** said home network performance parameter (32) comprises one or more of the following parameters:
- data rate;
- data error rate.

5. A home network analyser according to any of the preceding claims, **characterised in that** said detection module (40) is configured to detect said change in said home network performance parameter (32) when said home network performance parameter (32) passes a predetermined home network performance parameter threshold (33).

6. A home network analyser according to any of the preceding claims, **characterised in that** said home network signature parameter (34) comprises:
- the Channel Frequency Response of said home network (1); or
- the Channel Delay Spread of said home network (1), which is the inverse Fourier transform of the Channel Frequency Response of said home network (1).

7. A home network analyser according to claim 6, **characterised in that** said home network signature parameter (34) further comprises the signal energy of said home network (1).

8. A home network analyser according to claim 6 or 7, **characterised in that** said classification module (60) is further configured to link said Channel Delay Spread to a home network topology, selected from:
- an open circuit network topology, comprising a home network branch (3) without a device (4) coupled to it, when said channel delay spread exceeds a predetermined maximum value;
- a matched impedance load network topology, comprising a home network branch (3) with a device (4) with a matched impedance load, when said channel delay spread is lower than a predetermined minimum value; and/or
- a mismatched load impedance network topology, comprising a home network branch (3) with a device (4) with a mismatched impedance load, when said channel delay spread is a value between said predetermined minimum value and said predetermined maximum value.

9. A home network analyser according to claim 7, **characterised in that** said classification module (60) is further configured to link said Channel Delay Spread to a home network topology, selected from:
- an open circuit network topology, comprising a home network branch (3) without a device (4) coupled to it, when additionally said signal energy is reduced with respect to the theoretical channel energy of a direct link home network topology;
- a matched impedance load network topology, comprising a home network branch (3) with a device (4) with a matched impedance load, when additionally said signal energy is reduced with respect to the theoretical channel energy of a direct link home network topology and reduced with respect to the theoretical channel energy of an open circuit home network topology; and/or
- a mismatched load impedance network topology, comprising a home network branch (3) with a device (4) with a mismatched impedance load, when said signal energy is reduced with respect to the theoretical channel energy of a direct link home network topology and is increased with respect to the theoretical channel energy of an open circuit home network topology.

10. A home network analyser according to claim 8 or 9, **characterised in that** said classification module (60) is further configured to link said analysis of said first measurement (36) of said home network signature parameter (34) and said second measurement (38) of said home network signature parameter (34) to a modification of said home network topology.

11. A home network analyser according to claim 10, **characterised in that** said classification module (60) is further configured to link said modification of said home network topology to an addition and/or a removal of at least one device (4, 5) to said home network (1).

12. A method for analysing a home network (1) by means of a home network analyser (10) comprising a collection module, a detection module; a selection module and a classification module, the method comprising the steps of:
- said collection module (30) collecting a plurality of consecutive measurements of a home network performance parameter (32) and a home network signature parameter (34);
- said detection module (40) detecting a change in said home network performance parameter;
- said selection module (50) selecting, when said detection module (40) detects said change, a first measurement (36) of said collected home network signature parameter (34) and a second measurement (38) of said collected home network signature parameter (34), said first measurement (36) being collected during a first time period preceding said change and said second measurement (38) being collected during a second time period following said change; and
- said classification module (60) analysing said first measurement (36) and said second measurement (38).

13. A computer program product comprising computer program code means that adapt an analyser to perform the method according to claim 12 when run on said analyser.

## Patentansprüche

1. Heimnetzwerk-Analysator (10) für ein Heimnetzwerk (1), umfassend:
- Sammlermodul (30), konfiguriert für das Sammeln einer Vielzahl aufeinanderfolgender Messungen:
- eines Heimnetzwerk-Leistungsparameters (32) und
- eines Heimnetzwerk-Signaturparameters (34);
- Erfassungsmodul (40), angeschlossen an besagtes Sammlermodul (30) und konfiguriert für das Erfassen einer Änderung an besagten Heimnetzwerk-Leistungsparametern (32);
- Auswahlmodul (50), angeschlossen an besagtes Sammlermodul (30) und besagtes Erfassungsmodul (40) und so konfiguriert, dass es in dem Moment, wenn besagtes Erfassungsmodul (40) besagte Änderung erfasst, eine erste Messung (36) besagter Heimnetzwerk-Signaturparameter (34) und eine zweite Messung (38) besagter Heimnetzwerk-Signaturparameter (34) auswählt, wobei besagte erste Messung (36) während eines ersten Zeitraums vor besagter Änderung und besagte zweite Messung (38) während eines zweiten Zeitraums nach besagter Änderung gesammelt wird;
- Klassifizierungsmodul (60), angeschlossen an besagtes Auswahlmodul (50) und konfiguriert für das Analysieren besagter erster Messung (36) und besagter zweiter Messung (38).

2. Ein Heimnetzwerk-Analysator nach Anspruch 1, **dadurch gekennzeichnet, dass** besagtes Heimnetzwerk (1) ein Stromleitungskommunikationsnetz umfasst.

3. Ein Heimnetzwerk-Analysator nach Anspruch 1 oder 2, **dadurch gekennzeichnet, dass** besagtes Heimnetzwerk umfasst:
- ein koaxiales Kommunikationsnetz; und/oder
- ein Twisted-Pair-Kommunikationsnetz.

4. Ein Heimnetzwerk-Analysator nach jeglichem der vorgenannten Ansprüche, **dadurch gekennzeichnet, dass** besagter Heimnetzwerk-Leistungsparameter (32) einen oder mehrere der folgenden Parameter umfasst:
- Datenrate;
- Datenfehlerrate;

5. Ein Heimnetzwerk-Analysator nach jeglichem der vorgenannten Ansprüche, **dadurch gekennzeichnet, dass** besagtes Erfassungsmodul (40) dafür konfiguriert ist, besagte Änderung bei besagtem Heimnetzwerk-Leistungsparameter (32) dann zu erfassen, wenn besagter Heimnetzwerk-Leistungsparameter (32) einen vorbestimmten Heimnetzwerk-Leistungsparameter-Grenzwert (33) übersteigt.

6. Ein Heimnetzwerk-Analysator nach jeglichem der vorgenannten Ansprüche, **dadurch gekennzeichnet, dass** besagter Heimnetzwerk-Signaturparameter (34) umfasst:
- die Kanalfrequenzantwort besagten Heimnetzwerks (1); oder
- Die Aufspreizung der Kanalverzögerung besagten Heimnetzwerks (1), welche in der inversen Fourier-Transformation der Kanalfrequenzantwort besagten Heimnetzwerks (1) besteht.

7. Ein Heimnetzwerk-Analysator nach Anspruch 6, **dadurch gekennzeichnet, dass** besagter Heimnetzwerk-Signaturparameter (34) weiterhin die Signalenergie besagten Heimnetzwerks (1) umfasst.

8. Ein Heimnetzwerk-Analysator nach Anspruch 6 oder 7, **dadurch gekennzeichnet, dass** besagtes Klassifizierungsmodul (60) weiterhin dafür konfiguriert ist, besagte Aufspreizung der Kanalverzögerung mit einer Heimnetzwerks-Struktur zu verknüpfen, die ausgewählt ist aus:
- einer Netzwerkstruktur mit offenem Schaltkreis, eine Heimnetzwerk-Nebenstelle (3) ohne an sie gekoppeltes Gerät (4) umfassend, wenn besagte Aufspreizung der Kanalverzögerung einen vorgegebenen Höchstwert überschreitet;
- einer Netzwerkstruktur mit angepasster Impedanzlast, eine Heimnetzwerk-Nebenstelle (3) mit einem Gerät (4) mit angepasster Impedanzlast umfassend, wenn besagte Aufspreizung der Kanalverzögerung einen voreingestellten Mindestwert unterschreitet; und/oder
- einer Netzwerkstruktur mit falsch angepasster Impedanzlast, eine Heimnetzwerk-Nebenstelle (3) mit einem Gerät (4) mit falsch angepasster Impedanzlast umfassend, wenn der Wert besagter Aufspreizung der Kanalverzögerung zwischen besagtem voreingestelltem Mindestwert und besagtem voreingestelltem Höchstwert liegt.

9. Heimnetzwerk-Analysator nach Anspruch 7, **dadurch gekennzeichnet, dass** besagtes Klassifizierungsmodul (60) weiterhin dafür konfiguriert ist, besagte Aufspreizung der Kanalverzögerung mit einer Heimnetzwerkstruktur zu verknüpfen, die ausgewählt ist aus:
- einer Netzwerkstruktur mit offenem Schaltkreis, eine Heimnetzwerk-Nebenstelle (3) ohne an sie gekoppeltes Gerät (4) umfassend, wenn zudem besagte Signalenergie bezüglich der theoretischen Kanalenergie einer Direktlink-Heimnetzwerkstruktur vermindert ist;
- einer Netzwerkstruktur mit angepasster Impedanzlast, eine Heimnetzwerk-Nebenstelle (3) mit einem Gerät (4) mit angepasster Impedanzlast umfassend, wenn zudem besagte Signalenergie bezüglich der theoretischen Kanalenergie einer Direktlink-Heimnetzwerkstruktur vermindert ist und zudem hinsichtlich der theoretischen Kanalenergie einer Netzwerkstruktur mit offenem Kreislauf vermindert ist; und/oder
- einer Netzwerkstruktur mit falsch angepasster Impedanzlast, eine Heimnetzwerk-Nebenstelle (3) mit einem Gerät (4) mit falsch angepasster Impedanzlast umfassend, wenn besagte Signalenergie bezüglich der theoretischen Kanalenergie einer Direktlink-Heimnetzwerkstruktur erhöht ist und zudem hinsichtlich der theoretischen Kanalenergie einer Netzwerkstruktur mit offenem Kreislauf vermindert ist.

10. Ein Heimnetzwerk-Analysator nach Anspruch 8 oder 9, **dadurch gekennzeichnet, dass** besagtes Klassifizierungsmodul (60) weiterhin dazu konfiguriert ist, besagte Analyse besagter erster Messung (36) besagter Heimnetzwerks-Signaturparameter (34) und besagter zweiter Messung (38) besagter Heimnetzwerks-Signaturparameter (34) mit einer Änderung besagter Heimnetzwerkstruktur zu verknüpfen.

11. Heimnetzwerk-Analysator nach Anspruch 10, **dadurch gekennzeichnet, dass** besagtes Klassifizierungsmodul (60) weiterhin dazu konfiguriert ist, besagte Modifizierung besagter Heimnetzwerkstruktur mit einem Hinzufügen und/oder Entfernen von mindestens einem Gerät (4, 5) zu/aus besagtem Heimnetzwerk (1) zu verknüpfen.

12. Verfahren zur Analyse eines Heimnetzwerks (1) anhand eines Heimnetzwerk-Analysators (10), der ein Sammlermodul, ein Erfassungsmodul, ein Auswahlmodul und ein Klassifizierungsmodul umfasst, folgende Schritte umfassend:
- Sammeln einer Vielzahl aufeinanderfolgender Messungen eines Heimnetzwerk-Leistungsparameters (32) und eines Heimnetzwerk-Signaturparameters (34) durch besagtes Sammlermodul (30);
- Erfassen einer Änderung an besagtem Heimnetzwerk-Leistungsparameter durch das Erfassungsmodul (40);
- In dem Moment, wenn besagtes Erfassungsmodul (40) besagte Änderung erfasst, das Auswählen einer ersten Messung (36) besagten, gesammelten Heimnetzwerk-Signaturparameters (34) und einer zweiten Messung (38) besagten, gesammelten Heimnetzwerk-Signaturparameters (34) durch das Auswahlmodul (50), wobei besagte erste Messung (36) während eines ersten Zeitraums vor besagter Änderung und besagte zweite Messung (38) während eines zweiten Zeitraums nach besagter Änderung gesammelt wird; und
- Analysieren besagter erster Messung (36) und besagter zweiter Messung (38) durch besagtes Klassifizierungsmodul (60).

13. Computerprogramm-Produkt mit Computerprogramm-Codemitteln zur Anpassung eines Analysators zur Durchführung eines Verfahrens nach Anspruch 12 auf besagtem Analysator.

## Revendications

1. Analyseur de réseau domestique (10) pour un réseau domestique (1) comprenant :
- un module de collecte (30) configuré pour collecter une pluralité de mesures consécutives :
- d'un paramètre de performances de réseau domestique (32) et
- d'un paramètre de signature du réseau domestique (34) ;
- un module de détection (40) connecté audit module de collecte (30) et configuré pour détecter un changement dudit paramètre de performances de réseau domestique (32) ;
- un module de sélection (50) connecté audit module de collecte (30) et audit module de détection (40) et configuré pour sélectionner, lorsque ledit module de détection (40) détecte ledit changement, une première mesure (36) dudit paramètre de signature du réseau domestique (34) et une deuxième mesure (38) dudit paramètre de signature du réseau domestique (34), ladite première mesure (36) étant collectée durant une première période précédant ledit changement et ladite deuxième mesure (38) étant collectée durant une deuxième période faisant suite audit changement ;
- un module de classification (60) connecté audit module de sélection (50) et configuré pour analyser ladite première mesure (36) et ladite deuxième mesure (38).

2. Analyseur de réseau domestique selon la revendication 1, **caractérisé en ce que** ledit réseau domestique (1) comprend un réseau à courants porteurs en ligne.

3. Analyseur de réseau domestique selon la revendication 1 ou 2, **caractérisé en ce que** ledit réseau domestique (1) comprend :
- un réseau de communication coaxial ; et/ou
- un réseau de communication à paire torsadée.

4. Analyseur de réseau domestique selon l'une quelconque des revendications précédentes, **caractérisé en ce que** ledit paramètre de performances de réseau domestique (32) comprend un ou plusieurs des paramètres suivants :
- un taux de données ;
- un taux d'erreurs de données.

5. Analyseur de réseau domestique selon l'une quelconque des revendications précédentes, **caractérisé en ce que** ledit module de détection (40) est configuré pour détecter ledit changement dudit paramètre de performances de réseau domestique (32) lorsque ledit paramètre de performances de réseau domestique (32) dépasse un seuil de paramètre de performances de réseau domestique (33) prédéterminé.

6. Analyseur de réseau domestique selon l'une quelconque des revendications précédentes, **caractérisé en ce que** ledit paramètre de signature du réseau domestique (34) comprend :
- la réponse de fréquence de canal dudit réseau domestique (1) ; ou
- l'étalement de retard de canal dudit réseau domestique (1), qui est la transformée de Fourier inverse de la réponse de fréquence de canal dudit réseau domestique (1).

7. Analyseur de réseau domestique selon la revendication 6, **caractérisé en ce que** ledit paramètre de signature du réseau domestique (34) comprend en outre l'énergie du signal dudit réseau domestique (1).

8. Analyseur de réseau domestique selon la revendication 6 ou 7, **caractérisé en ce que** ledit module de classification (60) est en outre configuré pour associer ledit étalement de retard de canal à une topologie de réseau domestique, sélectionnée parmi :
- une topologie de réseau à circuit ouvert, comprenant une branche de réseau domestique (3) sans dispositif (4) couplé à celle-ci, lorsque ledit étalement de retard de canal dépasse une valeur maximale prédéterminée ;
- une topologie de réseau à charge d'impédance adaptée, comprenant une branche de réseau domestique (3) avec un dispositif (4) avec une charge d'impédance adaptée, lorsque ledit étalement de retard de canal est inférieur à une valeur minimale prédéterminée ; et/ou
- une topologie de réseau à impédance de charge mal adaptée, comprenant une branche de réseau domestique (3) avec un dispositif (4) présentant une charge d'impédance mal adaptée, lorsque ledit étalement de retard de canal est une valeur comprise entre ladite valeur minimale prédéterminée et ladite valeur maximale prédéterminée.

9. Analyseur de réseau domestique selon la revendication 7, **caractérisé en ce que** ledit module de classification (60) est en outre configuré pour associer ledit étalement de retard de canal à une topologie de réseau domestique, sélectionnée parmi :
- une topologie de réseau à circuit ouvert, comprenant une branche de réseau domestique (3) sans dispositif (4) couplé à celle-ci, lorsque, en outre, ladite énergie de signal est réduite par rapport à l'énergie de canal théorique d'une topologie de réseau domestique à liaison directe ;
- une topologie de réseau à charge d'impédance adaptée, comprenant une branche de réseau domestique (3) avec un dispositif (4) présentant une charge d'impédance adaptée, lorsque, en outre, ladite énergie de signal est réduite par rapport à l'énergie de canal théorique d'une topologie de réseau domestique à liaison directe et réduite par rapport à l'énergie de canal théorique d'une topologie de réseau domestique à circuit ouvert ; et/ou
- une topologie de réseau à impédance de charge mal adaptée, comprenant une branche de réseau domestique (3) avec un dispositif (4) présentant une charge d'impédance mal adaptée, lorsque ladite énergie de signal est réduite par rapport à l'énergie de canal théorique d'une topologie de réseau domestique à liaison directe et est augmentée par rapport à l'énergie de canal théorique d'une topologie de réseau domestique à circuit ouvert.

10. Analyseur de réseau domestique selon la revendication 8 ou 9, **caractérisé en ce que** ledit module de classification (60) est en outre configuré pour associer ladite analyse de ladite première mesure (36) dudit paramètre de signature du réseau domestique (34) et de ladite deuxième mesure (38) dudit paramètre de signature du réseau domestique (34) à une modification de ladite topologie de réseau domestique.

11. Analyseur de réseau domestique selon la revendication 10, **caractérisé en ce que** ledit module de classification (60) est en outre configuré pour associer ladite modification de ladite topologie de réseau domestique à un ajout d'au moins un dispositif (4, 5) audit réseau domestique (1) et/ou à un retrait d'au moins un dispositif (4, 5) dudit réseau domestique (1).

12. Procédé pour analyser un réseau domestique (1) au moyen d'un analyseur de réseau domestique (10) comprenant un module de collecte, un module de détection, un module de sélection et un module de classification, le procédé comprenant les étapes suivantes :
- ledit module de collecte (30) collecte une pluralité de mesures consécutives d'un paramètre de performances de réseau domestique (32) et d'un paramètre de signature du réseau domestique (34) ;
- ledit module de détection (40) détecte un changement dudit paramètre de performances de réseau domestique ;
- ledit module de sélection (50) sélectionne, lorsque ledit module de détection (40) détecte ledit changement, une première mesure (36) dudit paramètre de signature du réseau domestique (34) collecté et une deuxième mesure (38) dudit paramètre de signature du réseau domestique (34) collecté, ladite première mesure (36) étant collectée durant une première période précédant ledit changement et ladite deuxième mesure (38) étant collectée durant une deuxième période faisant suite audit changement ; et
- ledit module de classification (60) analyse ladite première mesure (36) et ladite deuxième mesure (38).

13. Produit de programme informatique comprenant des moyens de code de programme informatique qui s'adaptent à un analyseur pour exécuter le procédé selon la revendication 12 lorsqu'il est exécuté sur ledit analyseur.
